(19) Europäisches Patentamt

European Patent Office

Office européen des brevets

(11) **EP 0 965 844 A2**

(12) **EUROPEAN PATENT APPLICATION**

(43) Date of publication:
**22.12.1999 Bulletin 1999/51**

(51) Int. Cl.$^6$: **G01P 21/02**, G01P 21/00

(21) Application number: **99111110.5**

(22) Date of filing: **08.06.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **17.06.1998 CZ 189698**

(71) Applicant: **Vùts, Liberec**
**461 19 Liberec (CZ)**

(72) Inventors:
• **Sidlov, Pavel**
**460 14 Liberec (CZ)**

• **Skop, Petr**
**460 06 Liberec (CZ)**
• **Svoboda, Miroslav**
**460 06 Liberec (CZ)**

(74) Representative:
**Bergmeier, Werner, Dipl.-Ing. et al**
**Patentanwälte**
**Canzler & Bergmeier**
**Friedrich-Ebert-Strasse 84**
**85055 Ingolstadt (DE)**

(54) **Method and device for calibrating a sensor for the dynamic measurement of movements**

(57)     The invention relates to a method of dynamic measurement of linear, rotary, and swinging movements with a measuring system comprising at least one incremental movement sensor (4) and a precise pulse generator (3©) in which the precise pulse generator (30) serves to measure the length of time pulses immediately following each other between the pulses of the incremental movement sensor (4) of the object under measurement. Prior to the measurement proper, the currently existing constants of each member of the measuring system, in particular the number of pulses of the incremental movement sensor (4) per revolution or unit path, the chosen range of measurement and the chosen range of the produced output signal, are used to determine the resulting conversion constants of the measuring system, whereupon follows the measurement proper during which the previously determined resulting constants of the measuring system and the length of the time intervals immediately following each other between the pulses of the incremental movement sensor (4) are used to determine the characteristics of the movement of the object under measurement, out of which characteristics an output signal is then created, thus obtaining a reliable and precise measurement of the movement of the object under measurement in each of the wide range of possible movements.

The invention also relates to a measuring system for carrying out the method.

Fig. 1

EP 0 965 844 A2

Printed by Xerox (UK) Business Services
2.16.7/3.6

## Description

### Technical field

The invention relates to a method of dynamic measurement of linear, rotary, and swinging movements with a measuring system comprising at least one incremental movement sensor and a precise pulse generator in which the precise pulse generator is used to measure the length of time intervals, immediately following each other, between the pulses of the incremental movement sensor of the object under measurement.

The invention also relates to a measuring system comprising at least one incremental movement sensor which is by means of an input module with a precise pulse generator coupled with a basic processor unit which is fitted with at least one data output by means of which it is coupled with a device for a further processing of the output signal.

### Background art

At present, the measurement of linear, rotary, and swinging movements is carried out by various methods featuring slight differences even in the measurement of each characteristic of a specific movement type, for instance of the angular position of a shaft and of its angular velocity or angular acceleration. Due to this, the method of measurement and accordingly all the elements of the measuring system must be each time adapted to the characteristic to be measured according to the kind of the movement.

When using incremental movement sensors, most of the existing measuring systems permit to evaluate only the angular position or the path or position, of the incremental sensor. If the measurement of the angular or linear velocity by means of these incremental movement sensors is required, the pulse frequency of the incremental sensor is used, or also the resulting velocity of the movement is determined as a derivation of the measured angle or path of the incremental sensor in time. A relative advantage of these methods consists in their simplicity which makes them technically and economically easily accessible. On the other hand, they are single-purpose and only partly able to use the qualities of incremental movement sensors with ensuing insufficient accuracy which bans them from being used in some special cases.

A more precise measurement of angular or linear velocity of a movement can be obtained by measuring the lengths of the time intervals between the pulses of the incremental sensor. With such measurement, the angular or linear velocity is proportional to the inverted value of the length of such intervals. As compared with the methods described above, this method requires a more complicated and thus more expensive measuring system that is adapted to the conditions of the measurement. Depending on the actual need, this measuring system is a single- or double-channel one, and its structure corresponds to the currently used device for processing the measured values.

The measurement of the difference of the angular or linear velocities, for instance in measuring the deflections from the movement uniformity such as torsional vibrations of a shaft, consists in sensing the movement of the object under measurement by a couple of incremental sensors mounted for instance on each end of a rotating shaft. For increasing the measurement precision, the two incremental sensors can be replaced by special and correspondingly expensive sensors functioning for instance on the principle of the measurement of a relative movement of an inertial mass mounted on soft springs. However, such special sensors can work only in definite frequency bands so that they cannot be used for measurements in a wide scale of velocities and frequencies. It is also possible to use a couple of acceleration sensors, however, at the cost of some problems with the transfer of their signal from a moving object under measurement, with the determination of the speed of the integrations required to determine the angular velocity, with the zero instability, etc. Such measurement requires a double-channel measuring system structured according to the device just used for processing the measured values.

As determined by the character of the up to now used methods for the measurement of linear, rotary, and swinging movements and of the measuring systems used for carrying out the methods, each of these methods is suitable for the measuring of a relatively narrow scale of the movement types and their characteristics. Each measuring system based on one of the above methods requires, for ensuring its reliable function, some specific elements to be combined according to the given requirement into a suitable measuring system. This fails to meet the requirements to create a device universally applicable for measuring a wide range of various movements and their various characteristics since it requires to keep at all times a considerable number of such various elements and a highly-skilled attendance; these two factors considerably raise the total costs.

The invention intends to create a simple universal method of measurement of linear, rotary, and swinging movements as well as a simple and economically favourable measuring system for measuring such movements.

### Principle of the invention

The purpose of the invention has been achieved by a method of dynamic measurement of linear, rotary, and swinging movements with a measuring system comprising at least one incremental movement sensor and a precise pulse generator whose principle consists in that prior to the measurement proper, the currently existing constants of each member of the measuring system are used to determine the resulting constants of the measuring system, then follows the measurement proper during which the previously determined resulting constants of the measuring system and the length of the time intervals immediately following each other between the pulses of the incremental movement sensor are used to determine the characteristics of the movement of the object under measurement, out of which characteristics an output signal is then created, thus obtaining a reliable and precise measurement of the movement of the object under measurement in each of the wide range of possible movements.

The current (existing at a given time) constants of the members of the measuring system are the frequency of the precise pulse generator, the number of pulses of the incremental movement sensor per unit of path, and the number of pulses of the incremental movement sensor throughout which the measurement shall be carried out, thus achieving an eficient and fully sufficient calibration of the measuring system for the actual conditions of the movement of the object under measurement.

Preferably, the upper and the lower limit of the rotation speed or of the velocity of the object under measurement is determined before proceeding to the measurement proper, thus achieving the calibration of the output signal to the specific conditions of the measuring system.

Also preferably, the output signal is continuously registered and/or evaluated, thus achieving a reliable and precise evaluation of the movement of the object under measurement in each of the wide range of possible movements.

After being evaluated, the output signal is continuously registered and/or displayed which permits the subsequent further application of the measurement results.

In this way, the measurement of linear, rotary, and swinging movements with high accuracy and resolution throughout the whole range of possible movements and velocities is achieved.

The principle of the measuring system for carrying out the method consists in that the basic processor unit comprises a processor fitted with a fixed calculation algorithm with current constants of each member of the measuring system and that the processor is coupled with a device for setting the current constants of the members of the measuring system.

Preferably, the basic processor unit is fitted with a couple of signal inputs each of which having related thereto an input module with which an incremental movement sensor is coupled.

The basic processor unit is preferably fitted with a couple of data outputs of the output signal, the output signal of one of them being an analog one while the output signal of the other one is digital.

The device for setting current constants of the members of the measuring system of the fixed calculation algorithm of the processor of the basic processor unit is preferably made as a device for the further processing of the output signal.

The device for setting current constants of the members of the measuring system of the fixed calculation algorithm is preferably made as a digital computer with a keyboard and a monitor.

The method of measurement according to the present invention permits to set one and the same measuring set for measuring and evaluating in each case the most relevant characteristic of various specific movements under measurement by simply modifying accordingly the current constants of the measuring system. Besides, the incremental sensors used in the method of measurement according to this invention are easily accessible and very widely used, being a part of control or measuring systems of a number of machines and devices so that the method of measurement according to the invention is easy to apply on them.

## Figures

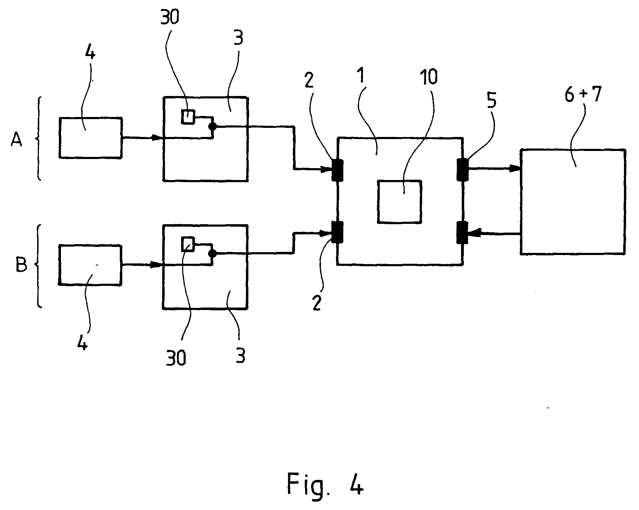

The invention is schematically shown in the accompanying drawing in which show Fig. 1 the basic wiring diagram of the measuring system, Fig. 2 the basic wiring diagram of the measuring system with the device for setting current constants of the members of the measuring system incorporated into the basic processor unit, Fig. 3 the basic wiring diagram of the measuring system with the basic processor unit made as a PC-card, and Fig. 4 the basic wiring diagram of the measuring system coupled with a control unit of the object under measurement.

## Examples of embodiment of the invention

The measuring system for dynamic measurements of linear, rotary, and swinging movements comprises a basic processor unit **1** fitted with a couple of signal inputs **2** for connecting two input modules **3**. In the shown embodiment, each of the signal inputs **2** is connected with the output of one input module **3** to whose input there is connected one incremental sensor **4** of the movement of the object under measurement so that the measuring system comprises two measuring channels, viz., A and B. In another, not shown example of embodiment, the measuring system comprises only one measuring channel. Each incremental sensor **4** is in a well-known manner situated in a suitable position in relation to the moving parts of the object under measurement.

Each of the two input modules **3** contains a well-known device for precise loss-free measurement of time intervals immediately following each other between the pulses of the incremental sensor **4** attached thereto, said device comprising a precise pulse generator **30** of the input module **3** whose pulses serve as a time base for the measurement. Each of the two measuring channels A, B can measure the movement of a different object or the movement of one object at different points.

The basic processor unit **1** comprises a processor **10** fitted with a fixed calculation algorithm for calculating the characteristics of the movement of the object under measurement sensed by the incremental sensors **4** of one or of the two measuring channels A, B and for converting them to an output signal with required characteristics. This algorithm comprises, on the one hand, the resulting constants $\underline{K}$, $\underline{k_2}$ of the measuring system and, on the other hand, the measured value of the time intervals between the pulses of the incremental sensor **4**.

The resulting constants $\underline{K}$, $\underline{k_2}$ of the measuring system are determined by the overall arrangement of the measuring system and are from the point of view of the measuring system a function of the current constants of the members of the measuring system out of which some can be adjustable as required by the needs of the measurement to be just carried out and are determined by the characteristics of the actually used incremental sensors **4**, by the frequencies $\underline{f_{mA}}$ and $\underline{f_{mB}}$ of the precise pulse generator **30** of the input module **3** of each measuring channel $\underline{A}$, $\underline{B}$, by the upper and lower limits $\underline{n_h}$, $\underline{n_d}$ of the revolution speed or by the velocity of the movement of the object under measurement.

The basic processor unit **1** is fitted with at least one data output **5** for coupling with a device **6** for the further processing of the output signal of the basic processor unit **1**. The basic processor unit **1** is also coupled with a device **7** for setting current constants of the members of the measuring system.

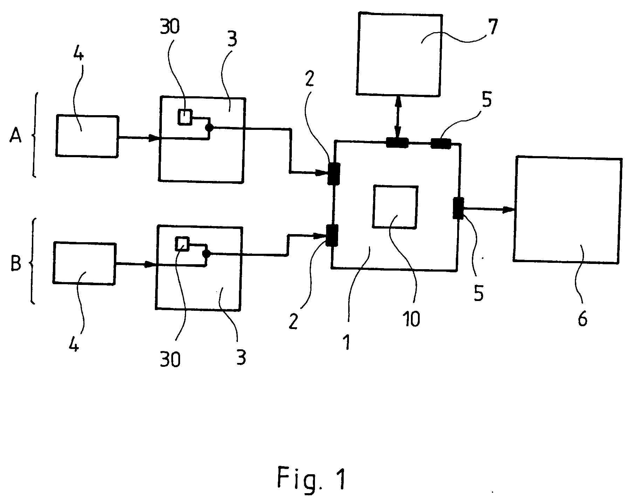

In the example of embodiment shown in Fig. 1, the basic processor unit **1** is fitted with a couple of data outputs **5**, the output signal on one of them being analog, and on the other, digital. The analog output signal is obtained by the well-known conversion of the digital output signal of the basic processor unit **1** by means of a D/A converter with suitable parameters.

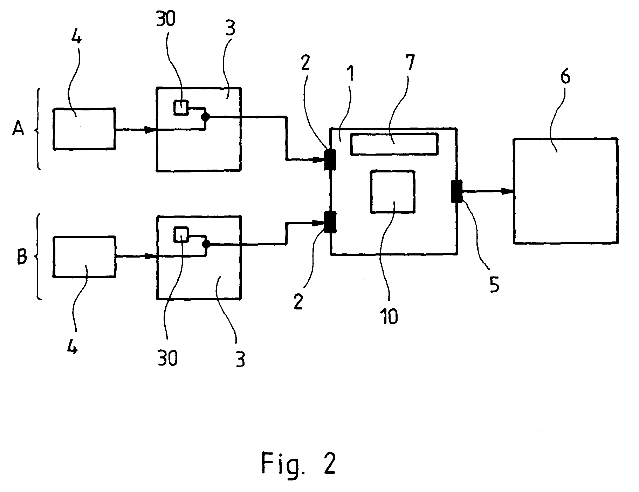

In the example of embodiment shown in Fig. 2, the device **6** for the further processing of the output signal of the basic processor unit **1** is made as an analyzer, the device **7** for setting current constants of the members of the measuring system consisting of a single-purpose computer physically implemented into the structure of the basic processor unit **1**.

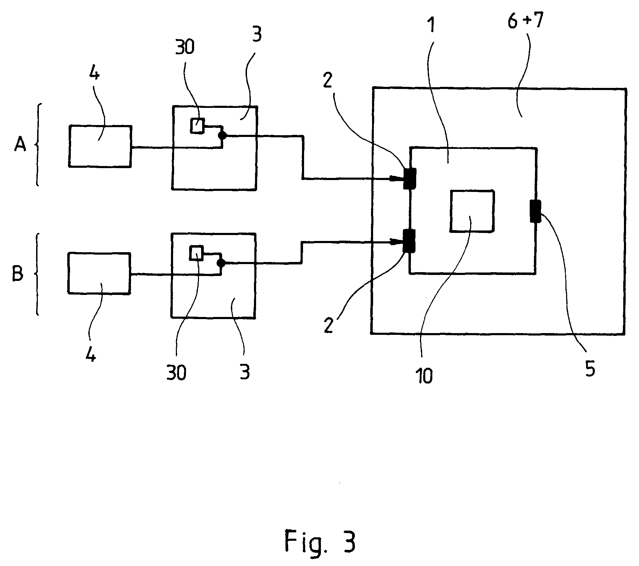

In the example of embodiment shown in Fig. 3, the device **6** for the further processing of the output signal of the basic processor unit **1** consists of a PC-computer serving at the same time as the device **7** for setting current constants of the members of the measuring system which permits the output signal of the basic processor unit **1** to be instantly evaluated in detail and stored on a data medium. In this example of embodiment, the basic processor unit **1** is made as what is known as PC-card of a PC-computer. Due to the minute dimensions and weight of the PC-computers and of the input modules **3**, such measuring system is easy to move from one place to another.

In the example of embodiment shown in Fig 1, the device **6** for the further processing of the output signal of the basic processor unit **1** is made as a control unit of the object under measurement, and the device **6** for setting current constants of the members of the measuring system is a part of this control unit which in response to the evaluation of the movement of the object under measurement adjusts this movement.

In a not shown example of embodiment, the device **6** for the further processing of the output signal of the basic processor unit **1** consists of one of the well-known recording devices, for instance of the computer-type memories or of a logger.

The measuring system for the dynamic measurement of linear, rotary, and swinging movements is in one of the well-known ways connected to a source of electric energy.

Each measuring channel $\underline{A}$ and $\underline{B}$ works as follows:

The incremental sensor **4** sends out a constant number of pulses per one revolution or per one unit of a path, regardless of the velocity of the movement of the object under measurement, so that the pulse frequency of the incremental sensor **4** is a function of the velocity of the movement of the object under measurement. The precise pulse generator **30** of the input module **3** generates pulses, very precisely defined in time, and the frequency fm of these pulses is constant in time and by orders superior to the pulse frequency of the incremental sensor **4**. For exact measurement of the length of the time intervals immediately following each other between the pulses of the incremental sensor **4** of the movement there is counted the number $\underline{X}$ of the pulses of the precise pulse generator **30** of the input module **3** in the period between the pulses of the incremental sensor **4**, and this number $\underline{X}$ of the pulses is used to determine the length of all the time intervals, immediately following each other between the pulses of the incremental sensor **4**.

The mathematical expression (Equation 1) of the dependence of the velocity of the movement of the object under measurement or of its rotation speed on the frequency $\underline{f_m}$ of the precise pulse generator **30** of the input module **3** shows that it is a function of a number of values out of which only the number $\underline{X}$ of the pulses of the precise pulse generator **30** of the input module between the pulses of the incremental sensor **4** is a variable in the course of the measurement and depending on the movement of the object under measurement. The other values describe individually the properties of the members of the measuring system expressed by current constants of the members of the measuring system which remain constant during the measurement procedure. These current constants are the number $\underline{p}$ of the pulses of the incremental movement sensor $\underline{4}$ per one revolution or per one unit of path, the number i of pulses of the incremental movement sensor $\underline{4}$ by means of which the number $\underline{X}$ of the pulses of the precise pulse generator $\underline{30}$ of the input module $\underline{3}$ will be counted (for reasons to be given below), and the upper and lower limits $\underline{n_h}$, $\underline{n_d}$ of the rotation speed or of the velocity of the movement of the object under measurement set beforehand to specify the chosen range of measurement.

The frequency $\underline{f_m}$ of the pulses of the precise pulse generator $\underline{30}$ of the input module $\underline{3}$ of each measuring channel $\underline{A}$, $\underline{B}$ has fundamental influence on the precision of the measurement because the number $\underline{X}$ of the pulses of the precise pulse generator $\underline{30}$ of the input module between two neighbouring pulses of the incremental sensor $\underline{4}$ of the movement is high when measuring slow movements, and low when measuring quick movements. However, the mathematical expression (Equation 1) shows that the unfavourable influence of a too low number $\underline{X}$ of pulses of the precise pulse generator $\underline{30}$ of the input module $\underline{3}$ between two neighbouring pulses of the incremental sensor $\underline{4}$ of the movement can be eliminated by measuring through a larger number $\underline{i}$ of the pulses of the incremental sensor $\underline{4}$ of the movement which permits to use for all measurements in the input module $\underline{3}$ of each measuring channel $\underline{A}$, $\underline{B}$ the precise pulse generator $\underline{30}$ with a suitable constant pulse frequency $\underline{f_m}$. It is also possible, depending on the existing number $\underline{X}$ of the pulses of the precise pulse generator $\underline{30}$ of the input module $\underline{3}$ between two neighbouring pulses of the incremental sensor $\underline{4}$, to update automatically and with instant effect on the measuring system the value of the number $\underline{i}$ of the pulses of the incremental sensor $\underline{4}$ of the movement through which it is measured, thus achieving a more perfect adaptation of the function of the measuring system to the actual/current movement characteristics of the object under measurement during the measurement procedure.

Before proceeding to the measurement proper, the resulting constants $\underline{K}$, $\underline{k_2}$ of the measuring system are determined on the basis of the actual/current constants of the members of the measuring system, thus calibrating the measuring system for the specific existing arrangement. Then follows the measurement proper during which, as stated above, there is counted the number $\underline{X}$ of pulses of the precise pulse generator $\underline{30}$ of the input module $\underline{3}$ between the chosen number $\underline{i}$ of pulses of the incremental sensor $\underline{4}$, and this number $\underline{X}$ is sent to the processor $\underline{10}$ of the basic processor unit $\underline{1}$ where it is used, together with the previously determined resulting constants $\underline{K}$, $\underline{k_2}$ of the measuring system, for the calculation of the characteristics of the movement of the object under measurement according to a fixed calculation algorithm. On the basis of the chosen and preset parameters, the thus calculated characteristics of the movement of the object under measurement are then converted into an output signal of the basic processor unit $\underline{1}$, and the signal is either stored on a suitable recorder to be processed later on or is processed instantly and then stored in the processed state. Instantly or with a certain delay, the results of this processing are displayed in a suitable way, for instance by print or on a monitor.

The fixed calculation algorithm of the processor $\underline{10}$ of the basic processor unit 1 for determining the values of the resulting constants $\underline{K}$, $\underline{k_2}$ of the measuring system for the measurement of angular velocities or revolutions is based on the equation

$$n = \frac{60 * f_m * i}{p * X} \ [\min^{-1}]$$

(equation 1)

The setting of the upper and lower limits $\underline{n_h}$, $\underline{n_d}$ of the rpm (revolutions per minute) of the shaft of the object under measurement ($\min^{-1}$) is governed by the equation of linear representation:

$$y = n * k_1 + k_2 \text{, resp. } y = \frac{K}{X} + k_2$$

(equation 2)

By solving the above equations (equations 2 and 1) with the involvement of the upper and tower limits $\underline{n_h}$ $\underline{n_d}$, and of the rpm of the shaft of the object under measurement the following values of the resulting constants $\underline{K}$, $\underline{k_2}$ of the measuring system are obtained:

$$K = \frac{60 * f_m * i}{p} * \frac{2^m - 1}{n_h - n_d}$$

(equation 3);

$$k_2 = - \frac{n_d * (2^m - 1)}{n_h - n_d}$$

(equation 4)

In the differential measurement of angular velocities, for instance on the two extremities of a shaft or on two different shafts of a gear box, or in any else double-channel differential measurement, with the measuring channels $\underline{A}$, $\underline{B}$ designed with index marks $_{\underline{A}}$, $_{\underline{B}}$, the resulting equation runs as follows of:.

$$y_{BR} = \frac{K_{1BR}}{X_B} - \frac{K_{2BR}}{X_A} + k_{2BR}$$

(equation 5)

where:

$$K_{1BR} = \frac{60 * f_{mB} * i_B}{p_B} * \frac{2^m - 1}{n_{hBR} - n_{dBR}}$$ (equation 6)

$$K_{2BR} = \frac{60 * f_{mA} * i_A}{z * p_A} * \frac{2^m - 1}{n_{hBR} - n_{dBR}}$$ (equation 7)

$$k_{2BR} = -\frac{n_{dBR} * (2^m - 1)}{n_{hBR} - n_{dBR}}$$ (equation 8)

Now will be described the application of the invention in a number of possible particular situations.

An example of the application of the invention for a single channel measurement by means of the measuring channel **A** is the measurement of deviations from uniformity of the revolving movement at stabilized medium rpm in which the application of the invention permits to achieve the measurement of the rpm course, or of the angular velocity with high discrimination and precision in one machine cycle or even in a number of machine cycles. In preparation of the measurement, the incremental sensor **4** of the rotary movement is mechanically coupled to the machine shaft to be measured, and via the input module 3 to the basic processor unit **1**. By means of the device **7** for setting the current constants of the members of the measuring system there are set the value of the number **p** of the pulses of the incremental sensor **4** per one revolution, the value of the number **i** of the pulses of the incremental sensor **4** through which it is measured, the frequency value $f_{mA}$ of the pulses of the precise pulse generator **30** of the input module **3**, the value of the lower limit $n_d$ of the rpm of the measured shaft, the value of the upper limit $n_h$ of the rpm of the measured shaft, and the value of the number **m** of the bits of the D/A converter of the device **6** for the further processing of the output signal of the basic processor unit **1**. Then are determined and automatically stored in the processor **10** of the basic processor unit **1** the resulting constants **K** and $k_2$. On the basis of the signal arriving from the incremental sensor **4** and of the precise pulse generator **30** of the input module **3**, the processor **10** of the basic processor unit **1** calculates the instantaneous value **y** which is the input into the D/A converter situated in the device **6** for the further processing of the output signal of the basic processor unit **1**. The voltage range of the output signal coming from the D/A converter, i.e., its minimum and maximum voltage, corresponds to the range of the rpm $n_d$ - $n_h$ of the measured shaft. The voltage is then led to the input of the registering and/or displaying device. By means of this, very sensitive and precise measurement of the fluctuations/changes in the rpm or in the angular velocity of the measured shaft of the machine is achieved. The output signal can be then further utilized as a controlled value entering the adjusting device for maintaining the rpm of the machine at a constant value.

An example of application of the invention as a double-channel measurement by means of the measuring channels **A** and **B** is the measurement for obtaining a very precise signal which is proportional to the difference of the rpm or of the angular velocities of two measured shafts, for instance for sensitive regulation of drives, in the drives of bridge cranes, machines used in the paper industry, broaching machines or rolling mills, where the maintaining of a given gear ratio between the two shafts is required. During the measurement according to the invention, the rpm or the angular velocity, of one shaft is automatically converted to the rpm or the angular velocity, of the other shaft by their mutual gear ratio **z** and then is calculated the difference in the rpm's $n_{BR}$ of the two measured shafts as a basis for the output signal of the basic processor unit **1**. In the reduction to practice, the incremental sensors **4** are mechanically connected to the measured shafts, and their input modules **3**, to the basic processor unit **1**. The device **7** for setting current constants of the members of the measuring system is then used to set the values of the numbers $p_A$ and $p_B$ of the pulses of the incremental sensor **4** per one revolution at each of the two measuring channels **A**, **B**, the values of the numbers $i_A$ and $i_B$ of the pulses of the incremental sensor **4** of each of the two measuring channels **A**, **B** through which they are measured, the frequency values $f_{mA}$ and $f_{mB}$ of the pulses of the precise pulse generator **30** of the input module **3** of each of the two measuring channels **A**, **B** (preferably, the pulse frequencies $f_{mA}$ and $f_{mB}$ of the precise pulse generator **30** of the input modules **3** of the two measuring channels **A**, **B** can be alike), the value **z** of the gear ratio between the two measured shafts, i.e., the gear ratio $n_A/n_B$, the value of the lower limit $n_{dBR}$ of the difference in the rpm's of the two measured shafts, the value of the upper limit $n_{hBR}$ of the difference in the rpm's of the two measured shafts, and the value of the number **m** of the bits of the D/A converter of the measuring channel **B** situated in the device **6** for the further processing of the output signal of the basic processor unit **1**. On the basis of these actual/current constants of the members of the measuring system, the resulting constants $K_{1BR}$, $K_{2BR}$, and $k_{2BR}$ of the measuring system are then determined and automatically stored in the processor **10** of the basic processor unit **1**. Then follows the measurement in which on the basis of said resulting constants $K_{1BR}$, $K_{2BR}$, and $k_{2BR}$ there is determined the value $V_{BR}$ of the input into the above mentioned D/A converter of the measuring channel **B** whose output signal shows the voltage in a range from $U_1$ to $U_2$ corresponding to the range between the lower limit $n_{dBR}$ of the difference in the rpm's of the two measured shafts and the upper limit $n_{hBR}$ in the rpm's of the two measured shafts. This output signal of the above D/A converter of the measuring channel **B** can be subsequently used as a controlled value entering the regulation device which is then able to maintain between the two measured shafts the required gear ratio **z** with a high precision degree. The output signal of the measuring channel **A** which is proportional to the rpm of the first measured shaft measured by it and is obtained in the same manner as in the first described application, can be used also for the measurement and/ or regulation of the rpm of this measured shaft so that also the possibility of combining the single-channel and the double-channel is applied here.

An example of application of the invention where both the single-channel and the double-channel measurement can be used, is the measurement of the movement of the needle drive wheels of a rapier loom. These measurements are important for evaluating the critical phase of the weft insertion into the shed, i.e., of the phase in which the weft is transmitted from one needle to the other. In the single-channel measurement, the object of evaluation are also the angles of rotation of the needle drive wheels permitting to evaluate the maximum course. In the double-channel measurement, the sense of rotation related to any of the measuring channels **A** and **B** is set so as to be opposite to the sense of rotation related to the other measuring channel **A** or **B**. Instead of measuring the difference between the two angular velocities, the differential measurement refers to the sum of the two angular velocities which is proportional to the relative velocity of the two needles. In a similar manner, the device **6** for the further processing of the output signal of the basic processor unit **1** can evaluate also the sum of the rotation angles of the two needle drive wheels which is proportional to the relative distance of the two needles.

## Industrial applicability

As can be seen from the above, the method of dynamic measurement of linear, rotary, and swinging movements with a measuring system comprising at least one incremental movement sensor **4** and a precise pulse generator **30** can be used in a wide range of measurements of both rotary and linear movements such as the measurements of torsional vibrations, on gear boxes or on coupled shafts, measurements of the start and stop phase of machines and devices, of very precise measurement of the rpm, of swinging movements, for the verification of the precision of incremental sensors and measurement on machines already fitted with incremental sensors. The invention also can be used in various applications of the control systems of machines and devices, for instance for improving the function of controlled drives.

## Claims

1. A method of dynamic measurement of linear, rotary, and swinging movements with a measuring system comprising at least one incremental movement sensor and a precise pulse generator in which the precise pulse generator serves to measure the length of time pulses immediately following each other between the pulses of the incremental movement sensor of the object under measurement, characterized by that prior to the measurement proper, the currently existing constants of each member of the measuring system are used to determine the resulting constants of the measuring system, whereupon follows the measurement proper during which the previously determined resulting constants of the measuring system and the length of the time intervals immediately following each other between the pulses of the incremental movement sensor (4) are used to determine the characteristics of the movement of the object under measurement, out of which characteristics an output signal is then created, thus obtaining a reliable and precise measurement of the movement of the object under measurement in each of the wide range of possible movements.

2. A method as claimed in Claim 1, characterized by that the current (existing at a given time) constants of the members of the measuring system are the frequency ($f_m$) of the precise pulse generator (30), the number (p) of pulses of the incremental movement sensor (4) per unit of path, and the number of pulses (i) of the incremental movement sensor (4) throughout which the measurement shall be carried out, thus achieving an efficient and fully sufficient calibration of the measuring system for the actual conditions of the movement of the object under measurement.

3. A method as claimed in Claims 1 and 2, characterized by that the upper and the lower limit ($n_h$, $n_d$) of the rotation speed or of the velocity of the object under measurement is determined before proceeding to the measurement proper, thus achieving the calibration of the output signal to the specific conditions of the measuring system.

4. A method as claimed in Claim 1 to 3, characterized by that the output signal is continuously registered and/or evaluated, thus achieving a reliable and precise evaluation of the movement of the object under measurement in each of the wide range of possible movements.

5. A method as claimed in Claim 4, characterized by that the output signal, after being evaluated, is continuously registered and/or displayed thus permitting a subsequent further use of the measurement results.

6. A measuring system for carrying out the method as claimed in Claims 1 to 5, comprising at least one incremental movement sensor which is by means of its input module with the precise pulse generator coupled with a basic processor unit fitted with at least one data output by means of which it is coupled with a device for the further processing of the output signal, characterized by that the basic processor unit (1) comprises a processor (10) fitted with a fixed calculation algorithm with current constants of each member of the measuring system and that the processor (10) is coupled with a device (7) for setting the current constants of the members of the measuring system.

7. A measuring system as claimed in Claim 6, characterized by that the basic processor unit (1) is fitted with a couple of signal inputs (2) each of which having related thereto an input module (3) with which an incremental movement sensor (4) is coupled.

8. A measuring system as claimed in Claims 6 and 7, characterized by that the basic processor unit (1) is fitted with a couple of data outputs (5) of the output signal, the output signal of one of them being an analog one while the output signal of the other one is digital.

9. A measuring system as claimed in Claims 6 to 8, characterized by that the device (7) for setting current constants of the members of the measuring system of the fixed calculation algorithm of the processor (10) of the basic processor unit (1) is made as a device (6) for the further processing of the output signal.

10. A measuring system as claimed in Claims 6 to 9, characterized by that the device (7) for setting current constants of the members of the measuring system of the fixed calculation algorithm of the processor (10) of the basic processor unit (1) is made as a digital computer with a keyboard and a monitor.

Fig. 1

EP 0 965 844 A2

Fig. 2

10

Fig. 3

Fig. 4